# EUROPÄISCHE PATENTSCHRIFT

(11) **EP 2 288 815 B1**
(45) Veröffentlichungstag und Bekanntmachung des Hinweises auf die Patenterteilung: **18.09.2013**
(21) Anmeldenummer: 09761577.7
(22) Anmeldetag: 19.05.2009
(51) Int. Cl.: F16B 12/18, F16B 12/30, A47B 47/02

(54) **SCHRAUBGESTELL**
SCREWED FRAME
CHÂSSIS ASSEMBLÉ PAR VIS

(30) Priorität: 11.06.2008 DE 102008027790
(43) Veröffentlichungstag der Anmeldung: 02.03.2011
(73) Patentinhaber: Hagenuk Marinekommunikation GmbH, 24220 Flintbek (DE)
(72) Erfinder: JENSEN, Thomas, 24247 Mielkendorf (DE)
(74) Vertreter: Wasiljeff, Johannes M.B.
(86) Internationale Anmeldenummer: PCT/EP2009/056077
(87) Internationale Veröffentlichungsnummer: WO 2009/150014

(56) Entgegenhaltungen:
- GB-A- 142 399
- GB-A- 1 187 039
- US-A- 3 589 784

## Beschreibung

Die Erfindung betrifft ein Schraubgestell zur Halterung von Einbauelementen, mit einem ersten und einem zweiten Außenrahmenelement und wenigstens einem zwischen diesen Außenrahmenelementen angeordneten sog. ersten Querholm und mit einer Spanneinrichtung, die wenigstens eine sog. erste Spannstange aufweist und das erste mit dem zweiten Außenrahmenelement verbindet, wobei sich die Spanneinrichtung von dem ersten zum zweiten Außenrahmenelement erstreckt und den ersten Querholm zwischen den Außenrahmenelementen einspannt.

Herkömmlicherweise sind derartige Schraubgestelle im Wesentlichen aus Aluminiumelementen ausgebildet, welche mittels selbstschneidenden Schrauben zusammengeschraubt werden. Dabei werden Außenrahmenelemente mit zwischen diesen Elementen angeordneten Querholmen verschraubt. Dieses bekannte Schraubgestell ist im Gegensatz zu einem geschweißten Gestell im Wesentlichen ohne Materialzerstörung zerlegbar und kann deshalb nach einem Zerlegen erneut zusammengeschraubt werden.

Nach einem erneuten Zusammenschrauben des Schraubgestells mit den selbstschneidenden Schrauben haben sich jedoch in der Regel die zuvor mittels selbstschneidenden Schrauben geschnittenen Gewinde geweitet, wodurch die Stabilität des Gestells beeinträchtigt wird, da eine Kraft, mittels der eine reibschlüssige Verbindung zwischen einer Schraube und einem dieser Gewinde lösbar ist, herabgesetzt sein kann. Folglich können die Schrauben bei wiederholtem Zusammenschrauben des Schraubgestells mit geringerem Kraftaufwand gelöst werden und sich auch leichter ungewollt lösen. Insbesondere dann, wenn das Schraubgestell Erschütterungen ausgesetzt ist, können sich die Schrauben selbsttätig lösen. Derartige Schraubgestelle weisen daher eine verringerte Stabilität auf, wodurch sie zumindest für Einsatzzwecke in beweglichen Objekten, wie Wasserfahrzeugen, ungeeignet für einen Wiederaufbau sind.

Aus FR 2 367 451 ist ein fahrbares Regal bekannt, bei dem über einem Gestell eine erste Ebene von ersten vertikal angeordneten Röhren und darüber eine zweite Ebene von zweiten vertikal angeordneten Röhren getragen wird. Durch Löcher in dem Gestell, in den Ebenen und in den Röhren erstrecken sich durchgehende Gewindestangen, die mittels Muttern jeweils eine erste und zweite Röhre sowie die erste Ebene zwischen dem Gestell und der zweiten Ebene einspannen. Aufgrund der Länge der Gewindestangen könnte das bekannte Regal auch dann, wenn es zerlegt ist, nicht oder nur umständlich in einen Schiffsrumpf, insbesondere U-Boot, transportiert oder dort aufgebaut werden. Das bekannte Regal wäre daher selbst dann, wenn es nicht fahrbar wäre, für die Verwendung in einem Schiffsrumpf ungeeignet.

Ferner ist aus derselben FR 2 367 451 ein fahrbares Gestell bekannt, bei dem einzelne vergleichsweise kurze Querriegel mittels Gewindestangen horizontal zwischen äußeren vergleichsweise längeren Querrohren eingespannt sind. Aufgrund seiner Abmessungen, insbesondere der Kürze der Querriegel, könnte das bekannte Gestell selbst dann, wenn es für die Aufnahme von Konsolenelementen geeignet wäre, allenfalls einzelne Konsolenelemente aufnehmen. Für die Anordnung mehrerer Konsolenelemente nebeneinander müssten hingegen mehrere einzelne Gestelle vorgesehen werden, was eine vergleichsweise große Stellfläche erforderlich machen sowie das Gewicht erhöhen würde. Beides wäre in einem Schiffsrumpf unerwünscht, so dass auch dieses bekannte fahrbare Gestell für die Verwendung in einem Schiffsrumpf ungeeignet wäre.

Aus US 3,589,784 ist eine schraubbare modulare Küchenschrankkonstruktion bekannt, bei der Querholme mittels Spannstangen und über die Spannstangen geschraubten Schrauben mit Innengewinde verspannt werden. Diese Schrauben wirken dabei zugleich als Muffen, in die eine weitere Spannstange zum Verspannen eines zweiten Querholms eingeschraubt werden kann. Dabei können die einzelnen Querholme mit unterschiedlichen Kräften eingespannt sein. Ein Nachspannen der aus allen miteinander verbundenen Spannstangen gebildeten Spanneinrichtung wäre allenfalls von einer Seite aus möglich.

GB 1 187 039 zeigt eine mittels Spannstangen verspannbare Regalkonstruktion, die ebenfalls die genannten Nachteile der US 3,589,784 aufweist. Ferner ist aus GB 1 42 399 ein Regal mit Gewindestangen bekannt, die jedoch keine Spannstangen sind, sondern selbst als Querträger eingespannt werden.

Der Erfindung liegt nach alledem die Aufgabe zugrunde, ein Schraubgestell bereitzustellen, welches sich für eine Verwendung in Schiffsrümpfen, insbesondere U-Booten, eignet, insbesondere zerlegbar ist und auch nach wiederholtem Zerlegen und Wiederaufbau sowie unter dem Einfluss von Schock- und Vibrationsbeanspruchung eine hohe Stabilität aufweist und zerlegt durch enge Räume und Luken transportiert und in engen Räumen, insbesondere von einer Seite, aufgebaut werden kann.

Die Erfindung löst dieses Problem mit einem Schraubgestell gemäß Anspruch 1. Dieses Schraubgestell weist ein erstes Außenrahmenelement, ein zweites Außenrahmenelement und einen sog. ersten Querholm auf, welcher zwischen diesen beiden Außenrahmenelementen angeordnet ist. Ferner weist das Schraubgestell wenigstens eine Spanneinrichtung auf, die wenigstens eine sog. erste Spannstange aufweist und das erste Außenrahmenelement mit dem zweiten Außenrahmenelement verbindet, wobei sich diese Spanneinrichtung von dem ersten Außenrahmenelement zu dem zweiten Außenrahmenelement erstreckt und diesen ersten Querholm zwischen diesen Außenrahmenelementen einspannt.

Weiter weist das Schraubgestell wenigstens eine zwischen dem ersten Querholm und dem zweiten Außenrahmenelement eingespannte Schraubgestellerweiterungseinheit auf, die ein Innenrahmenelement und wenigstens einen zweiten Querholm aufweist und das Schraubgestell in der Breite erweitert. Ferner weist die Spanneinrichtung wenigstens eine Spannstangenverlängerungseinheit auf, die eine zweite Spannstange und eine Muffe aufweist, mittels der die zweite Spannstange mit der ersten Spannstange und/oder mit einer weiteren Spannstange verbunden ist. Dabei korrespondiert die Länge des ersten Querholms mit der Länge der ersten Spannstange sowie die Länge des zweiten Querholms mit der Länge der zweiten Spannstange derart, dass die Muffe im Bereich, insbesondere in einer Durchbohrung, des Innenrahmenelements angeordnet ist.

Die Spanneinrichtung und insbesondere die mittels der zweiten Spannstange und der Muffe verlängerte erste Spannstange erstreckt sich somit immer, insbesondere auch im Falle des in der Breite erweiterten Schraubgestells, von dem ersten Außenrahmenelement zu dem zweiten Außenrahmenelement.

Die Spanneinrichtung weist eine erste Mutter im Bereich des ersten Außenrahmenelements sowie eine zweite Mutter im Bereich des zweiten Außenrahmenelements auf und ist sowohl mittels der ersten Mutter als auch mittels der zweiten Mutter spannbar.

Die Spanneinrichtung zieht hierbei die beiden Außenrahmenelemente aufeinander zu. Der erste und der zweite Querholm, welche nicht Teil der Spanneinrichtung sind, sind jedoch zusammen mit dem Innenrahmenelement zwischen die-sen beiden Außenrahmenelementen eingeklemmt bzw. eingespannt und bewirken somit, dass diese Außenrahmenelemente mit einem Abstand, welcher die Summer aus der Länge des ersten Querholms und des zweiten Querholms und einer Breite des Innenrahmenelements aufweist, beabstandet bleiben. Die Spanneinrichtung wird im Wesentlichen mit einer Zugkraft belastet, während auf den ersten und zweiten Querholm sowie das Innenrahmenelement eine Druckkraft ausgeübt wird, welche dieser Zugkraft entgegenwirkt. Das erfindungsgemäße Schraubgestell weist hierdurch eine hohe Stabilität auf, welche verglichen mit bekannten Schraubgestellen auch bei Schock- und Vibrationsbeanspruchung und nach wiederholtem Zerlegen und Aufbauen nicht reduziert wird. Darüber hinaus weist das Schraubgestell aufgrund seines dank der Spanneinrichtung stabileren Aufbaus eine geringere Breite auf als herkömmliche Schraubgestelle bei einem gleichen Abstand zwischen diesen Außenrahmenelementen.

Die Länge des ersten Querholms korrespondiert mit der Länge der ersten Spannstange und die Länge des zweiten Querholms korrespondiert mit der Länge der zweiten Spannstange derart, dass die Muffe im Bereich, insbesondere in einer Durchbohrung, des Innenrahmenelements angeordnet ist. Somit endet die erste Spannstange im Bereich eines ersten Innenrahmenelements, wo sie mittels der Muffe mit der zweiten Spannstange verbunden und somit verlängert ist. Die zweite Spannstange endet entweder im Bereich des zweiten Außenrahmenelements oder im Bereich eines weiteren Innenrahmenelements, wo sie zur Verbreiterung des Schraubgestells mittels der Muffe und einer weiteren zweiten Spannstange verlängert wird. Dadurch ist das Schraubgestell mittels der Schraubgestellerweiterungseinheit und der Spannstangenverlängerungseinheit flexibel in der Breite erweiterbar. Auch ein Transport des zerlegten Schraubgestells ist sehr einfach möglich, da auch im Falle einer größeren Breite des Schraubgestells keine längeren Spannstangen bzw. Querholme verwendet und transportiert werden müssen.

Zwischen den beiden Außenrahmenelementen können beliebig viele Innenrahmenelemente angeordnet werden. Dabei ist es möglich, insbesondere in engen Räumen, die Montage des Gestells ausschließlich von einer Seite aus durchzuführen. Mittels dieser Schraubgestellerweiterungseinheit oder mittels mehrerer dieser nebeneinander angeordneten Schraubgestellerweiterungseinheiten ist somit ein breites Schraubgestell bereitstellbar, welches eine hohe Stabilität aufweist.

Das erfindungsgemäße Schraubgestell eignet sich aufgrund seiner Zerlegbarkeit und Wiederaufbaubarkeit ohne Verlust der Widerstandsfähigkeit gegen Schock- und Vibrationsbeanspruchungen ideal für eine Verwendung in Schiffsrümpfen, insbesondere U-Booten, bei denen die Räume sehr eng und durch kleine Luken voneinander getrennt sind, durch die sämtliche Bauteile transportiert werden müssen. Bei U-Booten stellt sich überdies das besondere Problem, dass bereits der Zugang in das Innere des Bootes, nämlich durch ein Luk im Druckkörper sehr beengt ist und sämtliche Gegenstände durch dieses Luk hindurchbefördert werden müssen. Es ist daher bei derartigen Anwendungen des Schraubgestells, d.h. in Schiffsrümpfen bzw. U-Booten, vorteilhaft, wenn sich das Gestell derart zerlegen und wieder aufbauen lässt, dass seine Stabilität und Widerstandsfähigkeit gegen Schock- und Vibrationsbeanspruchung nicht leidet. Dies ist beim erfindungsgemäßen Schraubgestell der Fall.

Besonders bevorzugt weist die erste Spannstange an ihren beiden Enden ein Außengewinde auf, über welches die erste Mutter im Bereich des ersten Außenrahmenelementes geschraubt ist. Die Mutter ist hierbei zumindest teilweise zwischen einer zu einer Mitte des Schraubgestells weisenden Innenwand und einer von dieser Mitte wegweisenden Außenwand des ersten Außenrahmenelementes angeordnet. Alternativ kann die Mutter jedoch auch derart angeordnet sein, dass sie direkt an das erste Außenrahmenelement angrenzt.

In jedem Fall übt diese erste Mutter eine Zugkraft auf die erste Spannstange aus, während diese erste Mutter eine Druckkraft auf den ersten Querholm und die Schraubgestellerweiterungseinheit ausübt. Durch ein Aufschrauben der ersten Mutter auf das Außengewinde der ersten Spannstange ist nämlich diese Spannstange spannbar, wobei diese erste Mutter das erste Außenrahmenelement gegen den ersten Querholm drückt bzw. diesen ersten Querholm mittelbar an das erste Außenrahmenelement zieht.

In einer besonderen Ausführungsform weist die zweite Spannstange an ihren beiden Enden ein Außengewinde und die Muffe ein Innengewinde auf. Dieses Innengewinde der Muffe korrespondiert derart mit dem Außengewinde der zweiten Spannstange und/oder ersten Spannstange, dass diese zweite bzw. erste Spannstange in diese Muffe einschraubbar ist. Mittels dieser Muffe lässt sich somit die zweite Spannstange mit der ersten Spannstange und/oder mit einer weiteren Spannstange verbinden.

Während das erste Ende der ersten Spannstange im Bereich des ersten Außenrahmenelements angeordnet ist, ist die erste Spannstange an ihrem zweiten Ende mittels der Muffe und der zweiten Spannstange verlängert. In diesem Fall ist die Muffe im Bereich des ersten Endes der zweiten Spannstange angeordnet, während das zweite Ende der zweiten Spannstange im Bereich des zweiten Außenrahmenelements angeordnet ist.

Bevorzugt weist die zweite Spannstange ein Außengewinde wenigstens in dem Bereich auf, in welchem diese zweite Spannstange im Bereich des zweiten Außenrahmenelements angeordnet ist. Über dieses Außengewinde ist die zweite Mutter geschraubt, wobei diese zweite Mutter eine Zugkraft auf die erste Spannstange und die Spannstangenverlängerungseinheit und eine Druckkraft auf den ersten Querholm und die Schraubgestellerweiterungseinheit ausübt. Die Spanneinrichtung ist somit mittels der ersten Mutter und mittels der zweiten Mutter, d.h. sowohl im Bereich des ersten Außenrahmenelements als auch im Bereich des zweiten Außenrahmenelements spannbar.

Das erste Außenrahmenelement bzw. das zweite Außenrahmenelement weist bevorzugt einen Topf zur Verstärkung der Innenwand des ersten Außenrahmenelements bzw. einer Innenwand eines zweiten Außenrahmenelements auf. Dieser Topf weist einen Boden auf, welcher zumindest teilweise an dieser Innenwand anliegt. Die Spanneinrichtung drückt mittels der ersten bzw. zweiten Mutter gegen diesen Boden, weiter gegen die Innenwand des ersten bzw. zweiten Außenrahmenelements und weiter gegen den ersten bzw. zweiten Querholm. Der Topf wirkt hierbei einer Deformation des ersten bzw. zweiten Außenrahmenelements, insbesondere einem Eindrücken der Innenwand in den ersten bzw. zweiten Querholm, entgegen.

Dieser Topf ist in das erste bzw. zweite Außenrahmenelement eingeschweißt und weist in seinem Boden ein Loch auf, durch welches das erste bzw. zweite Ende der ersten bzw. zweiten Spannstange geführt ist. Vorteilhaft an dieser Konstruktion ist die Anordnung der ersten bzw. zweiten Schraube zwischen der Innenwand und einer Außenwand des ersten bzw. zweiten Außenrahmenelements, da die erste bzw. zweite Mutter hierdurch platzsparend im Bereich des ersten bzw. zweiten Außenrahmenelements angeordnet ist, wodurch die Breite des Schraubgestells gegenüber einer Anordnung der Schraube außerhalb des jeweiligen Außenrahmenelements reduziert ist.

Die Muttern sind als Spezialmuttern ausgebildet, mit deren Hilfe die Querholme und Spannstangen mit den Töpfen in den Außenrahmenelementen zentrierbar sind.

Bevorzugt weist der erste und ggf. der zweite Querholm einen Hohlraum auf, wobei die erste und/oder zweite Spannstange durch diesen Hohlraum geführt ist. Diese Anordnung der ersten bzw. zweiten Spannstange ist von Vorteil, da die Zugkräfte der Spannstangenverlängerungseinheit und die Druckkräfte des ersten bzw. zweiten Querholms somit im Mittel im Wesentlichen entlang derselben Geraden übertragen werden, was eine Deformation des ersten bzw. zweiten Außenrahmenelements verhindert oder zumindest gering hält. Zudem wird der jeweilige Hohlraum sinnvoll zur Aufnahme der Spannstange genutzt, welche daher keinen Platz außerhalb weiterer Bauteile des Schraubgestells beansprucht.

Bevorzugt weist der erste bzw. zweite Querholm an seinen beiden Enden jeweils eine Endkappe mit einem Loch auf, durch welches die erste bzw. zweite Spannstange über die o.g. Mutter bzw. Muffe geführt ist. Mittels dieser Endkappe bzw. Endkappen wird die erste bzw. zweite Spannstange in dem ersten bzw. zweiten Querholm zentriert, wodurch die Druckbelastung des eingespannten ersten bzw. zweiten Querholms im Wesentlichen gleichmäßig auf Außenwände dieses Querholms verteilt wird. Einer Überbeanspruchung dieses ersten bzw. zweiten Querholms durch einseitige Druckbelastung und einer Deformation dieses ersten bzw. zweiten Querholms wird somit entgegengewirkt. Der erste bzw. zweite Querholm dient auf diese Weise dank seiner Endkappen auch zur Fixierung der o.g. Mutter und Muffe.

Bevorzugt weist das Schraubgestell einen Verdrehschutz auf, welcher einem Verdrehen des ersten und/oder zweiten Querholms gegen das erste bzw. zweite Außenrahmenelement und/oder ggf. das Innenrahmenelement entgegenwirkt. Dieser Verdrehschutz wird durch einen Formschluss zwischen dem Außenrahmenelement bzw. Innenrahmenelement und dem Querholm bzw. der ersten oder zweiten Endkappe dieses Querholms bereitgestellt. Dieser Verdrehschutz wirkt einem Verdrehen des ersten bzw. zweiten Querholms um eine Längsachse dieses Querholms entgegen und erhöht somit die Stabilität des Schraubgestells.

Es ist vorteilhaft, wenn die erste und zweite Spannstange eine einheitliche standardisierte Länge oder jeweils eine von mehreren standardisierten Längen aufweisen. Dadurch wird in vorteilhafter Weise erreicht, dass die Muffe zumindest teilweise in einem Bereich, insbesondere in einer Durchbohrung, des Innenrahmenelements angeordnet ist. Der erste bzw. zweite Querholm weist somit ebenfalls eine standardisierte Länge auf, wobei die Länge des ersten bzw. zweiten Querholms derart mit der Länge der ersten bzw. zweiten Spannstange korrespondiert, dass die Muffe im Bereich des Innenrahmenelements angeordnet ist. Hierdurch ist das Schraubgestell mittels nur weniger standardisierter Bauteile flexibel erweiterbar und an unterschiedliche benötigte Breiten anpassbar. Dies hält einerseits die Kosten gering und ermöglicht zudem ein einfaches Aufbauen des Schraubgestells.

Bevorzugt weist das Schraubgestell wenigstens zwei, insbesondere wenigstens vier, erste und ggf. eine entsprechende Anzahl zweite Querholme auf. Mittels dieser Anzahl von Querholmen wird eine hohe Stabilität des Schraubgestells erreicht. Bevorzugt sind diese zwei Querholme in einer Ebene hintereinander oder übereinander angeordnet. Insbesondere weist das Schraubgestell mehrere Ebenen mit den paarweise hintereinander angeordneten Querholmen auf.

In einer bevorzugten Ausführungsform weist das Schraubgestell wenigstens ein Querverbindungselement auf, welches den ersten oder zweiten Querholm und einen weiteren ersten bzw. zweiten Querholm aufweist, wobei diese ersten bzw. zweiten Querholme zueinander fixiert, insbesondere mittels eines Flächenelements miteinander verbunden, sind. Dieses Querverbindungselement ist zwischen den Außenrahmenelementen angeordnet und eingespannt. Falls das Innenrahmenelement zwischen diesen Außenrahmenelementen angeordnet und eingespannt ist, kann das Querverbindungselement hierbei zwischen dem ersten oder zweiten Außenrahmenelement und diesem Innenrahmenelement oder im Falle eines weiteren zwischen den Außenrahmenelementen angeordneten Innenrahmenelements zwischen diesem Innenrahmenelement und dem weiteren Innenrahmenelement angeordnet sein. Das Querverbindungselement erhöht die Stabilität des Schraubgestells. Bevorzugt sind nämlich die zwei Querholme des Querverbindungselements übereinander angeordnet, wobei deren Fixierung zueinander einem seitlichen Wegkippen der Außenrahmenelemente und ggf. des Innenrahmenelements entgegenwirkt. Darüber hinaus kann dieses Querverbindungselement als Träger für weitere Bauteile dienen.

Bevorzugt weist das Schraubgestell Dämpfungsmittel auf, welche an dem Querverbindungselement angeordnet sind. Das Schraubgestell kann somit im Bereich des Querverbindungselements an eine Wand angrenzen, wobei die Dämpfungsmittel einer Übertragung von Vibrationen von der Wand auf das Schraubgestell oder auch von dem Schraubgestell auf die Wand entgegenwirken. Alternativ oder zusätzlich kann an dem Querverbindungselement ein Lüfter angeordnet sein, welcher zur Kühlung des Schraubgestells bzw. im Bereich dieses Schraubgestells angeordneter Geräte Luft umwälzt. Insbesondere kann das Schraubgestell vor einem Hohlraum, welcher Luft für einen Luftaustausch bereitstellt, angeordnet werden.

In einer bevorzugten Ausführungsform weist der Abstand zwischen dem ersten und dem zweiten Außenrahmenelement bzw. zwischen dem ersten oder zweiten Außenrahmenelement und dem Innenrahmenelement bzw. zwischen dem Innenrahmenelement und einem benachbarten weiteren Innenrahmenelement einen standardisierten Abstand auf. Die Breite dieses Abstands beträgt insbesondere 19 Zoll. Somit sind in das Schraubgestell Konsolen-Einbauelemente einbaubar, welche eine standardisierte Breite, insbesondere von 19 Zoll, aufweisen. Das Schraubgestell dient als Träger dieser Konsolen-Einbauelemente. Somit kann mittels dieses Schraubgestells eine Konsole aufgebaut, zerlegt und erneut aufgebaut werden, wobei die erfindungsgemäße Beschaffenheit des Schraubgestells einen einfachen Transport und eine hohe Stabilität dieses Schraubgestells bzw. der Konsole nach dem Wiederaufbau ermöglicht.

Weitere Ausführungsformen ergeben sich aus den Ansprüchen sowie aus dem anhand der Zeichnung näher erläuterten Ausführungsbeispiel. In der Zeichnung zeigt:
- Fig. 1: ein Schraubgestell in vereinfachter schematischer Darstellung;
- Fig. 2: einen Ausschnitt eines ersten Außenrahmenelements des Schraubgestells von Fig. 1 mit einem eingeschweißten Topf und einer ersten Mutter;
- Fig. 3: einen Ausschnitt eines ersten Querholms des Schraubgestells von Fig. 1 mit einer Endkappe und
- Fig. 4: einen Ausschnitt eines Innenrahmenelements von Fig. 1 mit einer Muffe, in welche ein zweites Ende einer ersten Spannstange und ein erstes Ende einer zweiten Spannstange eingeschraubt sind.

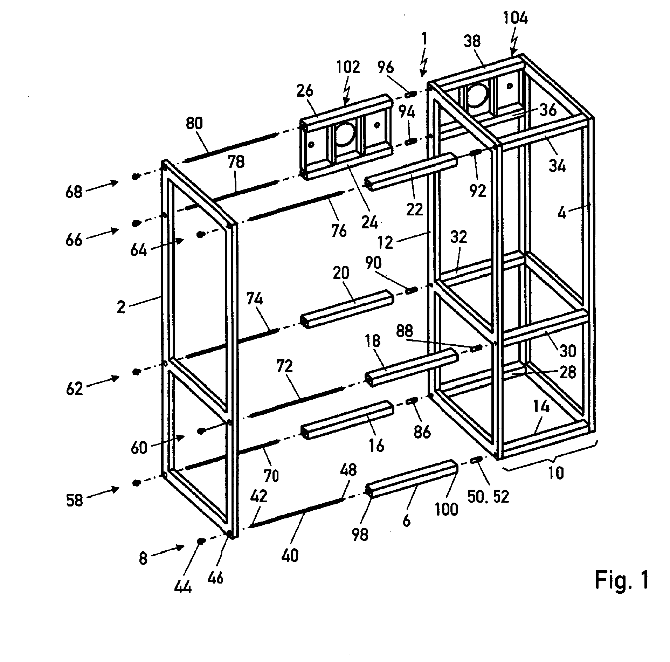

Fig. 1 zeigt ein Schraubgestell 1 mit einem ersten Außenrahmenelement 2, einem zweiten Außenrahmenelement 4 und einem ersten Querholm 6, welcher - vorzugsweise mit weiteren, nachfolgend beschriebenen Bauteilen - zwischen diesen Außenrahmenelementen 2 und 4 angeordnet ist. Erfindungsgemäß weist das Schraubgestell 1 eine Spanneinrichtung 8 auf, welche das erste Außenrahmenelement 2 mit dem zweiten Außenrahmenelement 4 verbindet, wobei sich diese Spanneinrichtung 8 von diesem ersten Außenrahmenelement 2 zu diesem zweiten Außenrahmenelement 4 erstreckt und diesen ersten Querholm 6 - vorzugsweise mit weiteren, nachfolgend beschriebenen Bauteilen - zwischen diesen Außenrahmenelementen 2 und 4 einspannt. Zur Veranschaulichung des Aufbaus des Schraubgestells 1, insbesondere zur Darstellung der Spanneinrichtung 8, ist das Schraubgestell 1 teilweise mit auseinandergezogenen Komponenten dargestellt.

Das Schraubgestell 1 weist eine Schraubgestellerweiterungseinheit 10 auf, welche dieses Schraubgestell 1 in der Breite erweitert. Diese Schraubgestellerweiterungseinheit 10 weist ein Innenrahmenelement 12 und einen zweiten Querholm 14 auf, wobei diese Schraubgestellerweiterungseinheit 10 zwischen dem ersten Querholm 6 und dem zweiten Außenrahmenelement 4 eingespannt ist. Insgesamt sind somit der erste Querholm 6, das Innenrahmenelement 12 und der zweite Querholm 14 zwischen dem ersten Außenrahmenelement 2 und dem zweiten Außenrahmenelement 4 eingespannt. Darüber hinaus sind weitere erste Querholme 16, 18, 20, 22, 24 und 26 zwischen dem ersten Außenrahmenelement 2 und dem Innenrahmenelement 12 eingespannt. Auch die Schraubgestellerweiterungseinheit 10 weist weitere Querholme auf, nämlich weitere zweite Querholme 28, 30, 32, 34, 36 und 38, welche zwischen dem Innenrahmenelement 12 und dem zweiten Außenrahmenelement 4 eingespannt sind.

Die Spanneinrichtung 8 weist eine sog. erste Spannstange 40 auf, welche als runde Stange ausgebildet ist, welche an ihren beiden Enden je ein Außengewinde aufweist. Alternativ hierzu kann auch eine runde oder eckige Stange vorgesehen sein oder eine Stange, die im Wesentlichen über ihre gesamte Länge ein Außengewinde aufweist.

Die erste Spannstange 40 weist somit an einem ersten Ende 42 ein Außengewinde auf, über welches eine erste Mutter 44 im Bereich des ersten Außenrahmenelements 2 geschraubt ist. Die erste Spannstange 40 ist hierbei durch eine Öffnung, insbesondere eine Bohrloch, durch eine Innenwand des ersten Außenrahmenelements 2 geführt und ragt bevorzugt höchstens bis zu Hälfte in einen zwischen dieser Innenwand und einer Außenwand befindlichen Hohlraum dieses ersten Außenrahmenelements in dieses Außenrahmenelement hinein. Die Außenwand dieses ersten Außenrahmenelements weist ebenfalls eine Öffnung bzw. ein Bohrloch auf, wobei diese Öffnung einen größeren Durchmesser aufweist, als die Öffnung an der Innenwand. Im Bereich dieser Öffnungen ist in das erste Außenrahmenelement 2 ein Topf 46 eingeschweißt, welcher einen Boden mit einem Loch aufweist. Der Boden liegt hierbei an der Innenwand des ersten Außenrahmenelements 2 an und verstärkt somit diese Innenwand. Darüber hinaus weist dieser Topf 46 in der Mitte seines Bodens ein Loch auf, durch welches die erste Spannstange 40 geführt ist. In dem Topf 46 ist die erste Mutter 44 angeordnet und über das erste Ende 42 der ersten Spannstange 40 geschraubt. Hierzu weist diese erste Mutter 44 ein Innengewinde auf, welches zu dem Außengewinde an dem ersten Ende 42 der ersten Spannstange 40 korrespondiert.

Mit ihrem zweiten Ende 48 ragt die erste Spannstange 40 höchstes bis zur Hälfte in das Innenrahmenelement 12 hinein. Dieses zweite Ende 48 weist ein Außengewinde auf, welches in eine Muffe 50 eingeschraubt ist, welche ein zu diesem Außengewinde korrespondierendes Innengewinde aufweist. Diese Muffe 50 ist Teil einer Spannstangenverlängerungseinheit 52, welche eben diese Muffe 50 und darüber hinaus eine im Wesentlichen in einem Hohlkörper des zweiten Querholms 14 angeordnete und daher nicht sichtbare zweite Spannstange aufweist. Diese zweite Spannstange ist analog zu der ersten Spannstange 40 ausgebildet. Mit seinen Enden ragt diese zweite Spannstange in das Innenrahmenelement 12 und in das zweite Außenrahmenelement 4 hinein.

Das zweite Außenrahmenelement 4 ist im Wesentlichen wie das erste Außenrahmenelement 2, insbesondere spiegelbildlich zu einer Spiegelebene ausgebildet, welche senkrecht von der Spanneinrichtung 8 durchstoßen wird. In diesem Ausführungsbeispiel gemäß Fig. 1 ist das gesamte Schraubgestell 1 spiegelbildlich ausgebildet, wobei die Spiegelebene im Bereich des Innenrahmenelements 12 angeordnet ist. Die ersten Querholme 6, 16, 18, 20, 22, 24 und 26 weisen eine einheitliche standardisierte Länge von größer als 19 Zoll auf, wodurch sich ein einheitlicher kürzester Abstand zwischen dem ersten Außenrahmenelement 2 und dem Innenrahmenelement 12 von ebenfalls größer als 19 Zoll ergibt. Analog hierzu weisen die zweiten Querholme 14, 28, 30, 32, 34, 36 und 38 ebenfalls diese standardisierte Länge von größer als 19 Zoll auf, wodurch sich ebenfalls ein kürzester Abstand von 19 Zoll zwischen dem Innenrahmenelement 12 und dem zweiten Außenrahmenelement 4 ergibt. Das Schraubgestell 1 ist somit als Träger zur Aufnahme von 19 Zoll breiten Konsolen-Einbauelementen geeignet, welche zwischen dem ersten Außenrahmenelement 2 und dem Innenrahmenelement 12 bzw. zwischen diesem Innenrahmenelement 12 und dem zweiten Außenrahmenelement 4 angeordnet werden können.

Aus Gründen der Stabilität bei gleichzeitigem niedrigem Materialeinsatz sind die Außenrahmenelemente 2 und 4 sowie das Innenrahmenelement 12 gitterartig aufgebaut. Insbesondere weisen die Rahmenelemente 2, 4 und 12 jeweils zwei senkrechte und wenigstens zwei waagerechte Elemente auf, welche stoffschlüssig miteinander verbunden, insbesondere miteinander verschweißt, sind.

Die Spanneinrichtung 8 ragt von dem ersten Außenrahmenelement 2 bis zu dem zweiten Außenrahmenelement 4. Diese Spanneinrichtung 8 ist mittels der ersten Mutter 44 gespannt. Darüber hinaus weist das Schraubgestell 1 bzw. die Spanneinrichtung 8 eine zweite Mutter auf, welche im Bereich des zweiten Außenrahmenelements 4 angeordnet und in Fig. 1 vom zweiten Außenrahmenelement 4 verdeckt ist. Auch diese zweite Mutter 44 spannt die Spanneinrichtung 8. Die Muttern 44 weisen nämlich Flächen auf, welche gegen den Boden des Topfes 46, welcher als erster Topf 46 im Bereich des ersten Außenrahmenelements 2 angeordnet ist, bzw. gegen einen Boden eines weiteren Topfes, welcher als zweiter Topf im Bereich des zweiten Außenrahmenelements 4 angeordnet ist, drücken. Somit drücken die Muttern 44 in Reihe den Boden des ersten Topfes 46, die Innenwand des ersten Außenrahmenelements 2, den ersten Querholm 6, das Innenrahmenelement 12, den zweiten Querholm 14, eine Innenwand des zweiten Außenrahmenelements 4 und den Boden des zweiten Topfes zusammen, wodurch sich eine hohe Stabilität des Schraubgestells 1 ergibt, welches zudem vorteilhaft zu montieren ist.

Das Schraubgestell 1 weist weitere Spanneinrichtungen 58, 60, 62, 64, 66 und 68 auf, welche analog zu der Spanneinrichtung 8 aufgebaut sind. Insbesondere ist jedem ersten Querholm 6, 16, 18, 20, 22, 24, 26 bzw. zweiten Querholm 14, 28, 30, 32, 34, 36, 38 der Schraubgestellerweiterungseinheit 10 genau eine Spanneinrichtung 8, 58, 60, 62, 64, 66, 68 zugeordnet. Durch jeden ersten Querholm 6, 16, 18, 20, 22, 24, 26 ist hierbei im Wesentlichen mittig entlang einer Spiegelachse dieses ersten Querholms die erste Spannstange 40 bzw. eine weitere erste Spannstange 70, 72, 74, 76, 78, 80 geführt. Analog hierzu ist die zweite Spannstange durch den zweiten Querholm 6 und sind weitere zweite Spannstangen durch die weiteren zweiten Querholme 28, 30, 32, 34, 36 und 38 geführt. Alle ersten Spannstangen 40, 70, 72, 74, 76, 78 und 80 sowie die in der Figur nicht sichtbaren zweiten Spannstangen weisen eine einheitliche standardisierte Länge auf und ragen mit ihrem ersten Ende 42 in das erste Außenrahmenelement 2 sowie mit ihrem zweiten Ende 48 in das Innenrahmenelement 12 bzw. mit einem ersten Ende in dieses Innenrahmenelement 12 und mit einem zweiten Ende in das zweite Außenrahmenelement 4 hinein. Die Muffe 50 sowie weitere Muffen 86, 88, 90, 92, 94 und 96 sind im Bereich des Innenrahmenelements 12 angeordnet.

Alle Querholme weisen Endkappen 98 und 100 auf. Diese Endkappen 98 und 100 sind auf Öffnungen an Enden eines langgestreckten Hohlkörpers des ersten Querholms 6 aufgesteckt und danach mit diesem Hohlkörper verschweißt. Diese Endkappen 98 und 100 weisen jeweils eine Öffnung bzw. Durchbohrung in ihrer Mitte auf, durch welche die erste Spannstange 40 geführt ist. Diese erste Spannstange 40 wird hierdurch in dem Hohlkörper des ersten Querholms 6 zentriert. Analog hierzu weisen auch alle anderen Querholme Endkappen zur Zentrierung der jeweils im Wesentlichen darin angeordneten Spannstange auf.

Der erste Querholm 6 weist an seinen Enden bzw. an den Endkappen 98 und 100 einen Verdrehschutz auf, welcher einem Verdrehen des ersten Querholms um seine Längsachse gegenüber dem ersten Außenrahmenelement 2 bzw. gegenüber dem Innenrahmenelement 12 entgegenwirkt. Insbesondere ist der erste Querholm 6 formschlüssig mit dem ersten Außenrahmenelement 2 bzw. dem Innenrahmenelement 12 über den Verdrehschutz gesichert. Analoges ergibt sich für alle weiteren Querholme zwischen dem ersten Außenrahmenelement 2 und dem Innenrahmenelement 12 sowie für alle zweiten Querholme zwischen dem Innenrahmenelement 12 und dem zweiten Außenrahmenelement 4 sowie in einer nicht dargestellten Ausführungsform für alle zweiten Querholme zwischen dem Innenrahmenelement 12 und einem ggf. vorhandenen weiteren Innenrahmenelement.

Das Schraubgestell 1 weist ein Querverbindungselement 102 und ein weiteres Querverbindungselement 104 auf. Dieses Querverbindungselement 102 bzw. 104 weist die ersten Querholme 24 und 26 bzw. die zweiten Querholme 36 und 38 auf. Diese ersten Querholme 24 und 26 bzw. zweiten Querholme 36 und 38 sind mittels eines Flächenelements und mehreren Verstrebungen miteinander verbunden. Diese Verstrebungen und dieses Flächenelement fixieren hierbei den ersten Querholm 24 zu dem ersten Querholm 26 bzw. den zweiten Querholm 36 zu dem zweiten Querholm 38. Somit wird eine hohe Stabilität des Querverbindungselements 102 bzw. 104 und des Schraubgestells 1 erreicht.

Die Querverbindungselemente 102 und 104 weisen darüber hinaus jeweils eine runde Öffnung in dem Flächenelement auf, in welche ein Lüfter eingesetzt werden kann. Darüber hinaus sind an den Querverbindungselementen 102 und 104 nicht dargestellte Dämpfungsmittel zur Absorption von Stößen und/oder Vibrationen vorgesehen. Diese Dämpfungsmittel können an einer Rückwand des Schraubgestells bzw. an einer Rückwand des Flächenelements an dem Querverbindungselement 102 bzw. 104 vorgesehen sein.

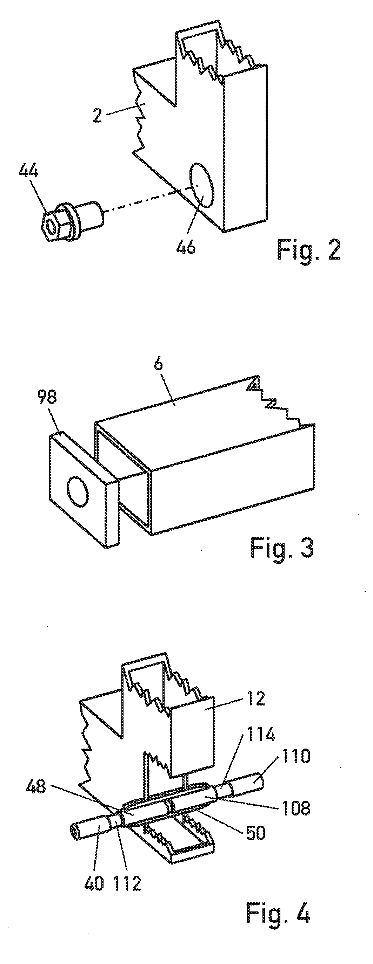

Fig. 2 zeigt einen Abschnitt des ersten Außenrahmenelements 2 von Fig. 1, welcher eine Öffnung aufweist, in welche der erste Topf 46 eingeschweißt ist. Die erste Mutter 44 ist bei dem zusammengebauten Schraubgestell 1 in dem ersten Topf 46 angeordnet und ragt somit nicht außenseitig des Schraubgestells 1 aus diesem ersten Topf 46 bzw. aus dem ersten Außenrahmenelement 2 heraus. Innenseitig des Schraubgestells 1 ragt die Mutter 44 aus dem Rahmenelement 2 heraus und zentriert so die Längsachse des Querholms bzw. der Spannstange mit der Mutter 44. Die Mutter 44 ist zu diesem Zweck als Spezialmutter ausgebildet, die mehrere unterschiedlich geformte Abschnitte aufweist. Ein erster Abschnitt weist eine Form zur Aufnahme eines Werkzeugs auf, bspw. - wie in Fig. 2 dargestellt - einen außensechskantförmigen Abschnitt. Alternativ kann es sich jedoch auch um einen außendrei- oder außenvierkantförmigen Abschnitt oder um einen innendrei-, -vier- oder -sechskantförmigen Abschnitt oder um einen torxartigen Abschnitt handeln. Ein zweiter Abschnitt ist scheibenförmig ausgebildet. Ein dritter Abschnitt weist ein Innengewinde auf, das an die Außengewinde der Spannstange 40 angepasst ist. Eine Verschraubung mittels der ersten Mutter 44 erhöht somit nicht die Breite des Schraubgestells 1. Insgesamt weist dieses Schraubgestell 1 daher bezogen auf den Abstand zwischen den Rahmenelementen 2, 4 und 10 eine verglichen mit bekannten Schraubgestellen geringe Breite auf.

Fig. 3 zeigt einen Ausschnitt des ersten Querholms 6 mit der Endkappe 98 in vergrößerter Darstellung.

Fig. 4 zeigt einen Ausschnitt des Innenrahmenelements 12 von Fig. 1 und einen Teil der Spanneinrichtung 8, welche im Bereich dieses Innenrahmenelements 12 bzw. in anliegenden Bereichen angeordnet ist. Ein Bereich um eine Öffnung bzw. Durchbohrung des Innenrahmenelements 12, in welcher die Muffe 50 angeordnet ist, ist geschnitten dargestellt.

Die Muffe 50 weist ein Innengewinde auf. Die erste Spannstange 40 ist mit ihrem zweiten Ende 48 bis zur Mitte der Muffe 50 in die Muffe 50 eingeschraubt. Auf einer anderen Seite dieser Muffe 50 ist das in der Beschreibung zu Fig. 1 genannte und noch nicht bezeichnete erste Ende 108 der dort ebenfalls genannten und noch nicht bezeichneten zweiten Spannstange 110 bis zur Mitte der Muffe 50 in diese Muffe 50 eingeschraubt. Die erste Spannstange 40 ist somit mittels der Muffe 50 mit der zweiten Spannstange 110 verbunden.

Die Spannstangen 40 und 54 weisen, vorzugsweise im Bereich ihrer Enden, Haltebereiche 112 und 114 auf. In diesen Haltebereichen 112 und 114 ist zur Vereinfachung der Montage des Schraubgestells 1 jeweils eine formschlüssige Verbindung mit einem Montagewerkzeug, insbesondere Schrauben- oder Maulschlüssel, herstellbar. Hierdurch kann beim Zusammenschrauben des Schraubgestells 1, insbesondere beim Verbinden der Spannstangen 40 und 54 mittels Muffe 50, d.h. beim Verlängern der Spanneinrichtung 8 wirksam ein Drehmoment bzw. ein Gegendrehmoment erzeugt werden. Die Haltebereiche 112, 114 werden vorzugsweise jeweils durch zwei einander gegenüberliegende, parallel zueinander stehende Flächen gebildet, die in die Spannstangen 40, 54 gefräst wurden.

Alle Spannstangen sind vorteilhafterweise wie die im Zusammenhang mit der Bezugsziffer 40 erläuterte Spannstange ausgebildet. Ferner sind vorteilhafterweise alle Muttern wie die im Zusammenhang mit der Bezugsziffer 44 erläuterte Mutter ausgebildet. Ferner sind vorteilhafterweise alle Querholme identisch ausgebildet. Entsprechendes gilt für alle Außenrahmenelemente sowie für alle Innenrahmenelemente. Ferner sind vorteilhafterweise alle Muffen identisch ausgebildet. Entsprechendes gilt für die Endkappen sowie die Querverbindungselemente. Auf diese Weise kann das erfindungsgemäße Schraubgestell mit einheitlichen Bauelementen aufgebaut werden, was die Lagerhaltung und den Aufbau erleichtert sowie die Herstellkosten reduziert.

Alternativ zu dem hier gezeigten Ausführungsbeispiel gemäß der Fig. 1, 2, 3 und 4 kann das Schraubgestell 1 wenigstens eine weitere Schraubgestellerweiterungseinheit und/oder wenigstens eine weitere Spannstangenverlängerungseinheit aufweisen. Hiermit ist ohne Veränderung der Abmessungen der Schraubgestellerweiterungseinheit 10 bzw. der Spannstangenverlängerungseinheit 52 ein Schraubgestell bereitstellbar, welches eine größere Breite als das hier dargestellte Schraubgestell 1 aufweist. Insbesondere kann somit ein Schraubgestell bereitgestellt werden, welches zur Aufnahme einer jeweils gewünschten Anzahl von Konsolenelementen geeignet ist.

In dem Fall, dass das Schraubgestell wenigstens eine weitere Schraubgestellerweiterungseinheit mit einem weiteren Innenrahmenelement aufweist, sind analog zu Fig. 4 zwei zweite Spannstangen mittels einer Muffe im Bereich dieses weiteren Innenrahmenelements miteinander verbunden.

Das Schraubgestell 1 ist sehr stabil und unempfindlich gegenüber Schock- und Vibrationsbeanspruchung. Es ist zerlegbar und im zerlegten Zustand leicht, insbesondere Platz sparend, zu transportieren. Nach seinem Wiederaufbau weist das Schraubgestell 1 wieder eine hohe Stabilität auf. Insbesondere werden die Querholme 6 und 14 von der Spanneinrichtung wieder fest eingespannt, wobei eine Haltekraft der Muttern 44 sich bei wiederholtem Aufbau des Schraubgestells 1 nicht oder nur unwesentlich verringert.

Das erfindungsgemäße Schraubgestell 1 weist hierbei geringe Abmessungen auf, da im Bereich des Innenrahmenelements 12 bei dem montierten Schraubgestell 1 keine Schraube oder Mutter aus diesem Innenrahmenelement 12 oder aus den Querholmen 6 und 14 herausgeführt sein muss. Nach außen hin zugänglich müssen lediglich die Muttern 44 sein, welche jedoch Platz sparend in den Töpfen 46 in Hohlräumen in dem ersten Außenrahmenelement 2 bzw. in dem zweiten Außenrahmenelement 4 angeordnet sind. Mittels dieser Muttern 44 sind die dazwischen liegenden Querholme 6 und 14 sowie das Innenrahmenelement 12 eingespannt bzw. fest einspannbar. Konstruktionsbedingt kann hierdurch der bei bekannten Schraubgestellen vorhandenen Gefahr entgegengewirkt werden, dass sich einzelne Bereiche des Schraubgestells lockern und das Schraubgestell somit instabil wird. Die Spanneinrichtung des erfindungsgemäßen Schraubgestells verbindet nämlich die beiden Außenelemente 2 und 4 miteinander und spannt alle in Reihe dazwischen angeordneten Bauteile, insbesondere die dazwischen angeordneten Querholme 6 und 14 sowie das Innenrahmenelement 12 mit gleicher Festigkeit ein, so dass sich eine homogene Kraftverteilung und eine gleichmäßige Festigkeit des Schraubgestells ergibt.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Schraubgestell zur Halterung von Einbauelementen mit einem ersten Außenrahmenelement (2), einem zweiten Außenrahmenelement (4), wenigstens einem sog. ersten Querholm (6), welcher zwischen diesen Außenrahmenelementen (2, 4) angeordnet ist, und
wenigstens einer Spanneinrichtung (8), welche wenigstens eine sog. erste Spannstange (40) aufweist und das erste Außenrahmenelement (2) mit dem zweiten Außenrahmenelement (4) verbindet, wobei sich diese Spanneinrichtung (8) von diesem ersten Außenrahmenelement (2) zu diesem zweiten Außenrahmenelement (4) erstreckt und diesen ersten Querholm (6) zwischen diesen Außenrahmenelementen (2, 4) einspannt, wobei das Schraubgestell (1) wenigstens eine zwischen dem ersten Querholm (6) und dem zweiten Außenrahmenelement (4) eingespannte Schraubgestellerweiterungseinheit (10) aufweist, die ein Innenrahmenelement (12) und wenigstens einen zweiten Querholm (14) aufweist und das Schraubgestell (1) in der Breite erweitert, und die Spanneinrichtung (8) wenigstens eine Spannstangenverlängerungseinheit (52) aufweist, die eine zweite Spannstange (110) und eine Muffe (50) aufweist, mittels welcher die zweite Spannstange (110) mit der ersten Spannstange (40) und/oder mit einer weiteren Spannstange verbunden ist, wobei die Länge des ersten Querholms (6) mit der Länge der ersten Spannstange (40) sowie die Länge der zweiten Spannstange (110) mit der Länge des zweiten Querholms derart korrespondiert, dass die Muffe (50) im Bereich des Innenrahmenelements (12) angeordnet ist,
**dadurch gekennzeichnet, dass**
die Spanneinrichtung eine erste Mutter (44) im Bereich des ersten Außenrahmenelements (2) sowie eine zweite Mutter im Bereich des zweiten Außenrahmenelements aufweist und sowohl mittels der ersten Mutter (44) als auch mittels der zweiten Mutter spannbar ist.

2. Schraubgestell nach Anspruch 1,
**dadurch gekennzeichnet, dass**
die erste Spannstange (40) an ihren beiden Enden (42, 48) Außengewinde aufweist, über welche diese erste Mutter (44) im Bereich des ersten Außenrahmenelementes (2) geschraubt ist, wobei diese erste Mutter (44) eine Zugkraft auf die erste Spannstange (40) und eine Druckkraft auf den ersten Querholm (6) und die Schraubgestellerweiterungseinheit (10) ausübt.

3. Schraubgestell nach Anspruch 2,
**dadurch gekennzeichnet, dass**
die zweite Spannstange (110) an ihren beiden Enden (108) Außengewinde und die Muffe (50) wenigstens ein Innengewinde aufweist, wobei diese zweite Spannstange (110) und/oder die erste Spannstange (40) bzw. eine weitere Spannstange in die Muffe (50) eingeschraubt sind bzw. ist.

4. Schraubgestell nach Anspruch 2 oder 3,
**dadurch gekennzeichnet, dass**
ein zweites Ende (48) der zweiten Spannstange (110) im Bereich des zweiten Außenrahmenelements (4) angeordnet ist und ein Außengewinde aufweist, über welches die zweite Mutter geschraubt ist, wobei diese zweite Mutter eine Zugkraft auf die erste Spannstange (40) und die Spannstangenverlängerungseinheit (52) und eine Druckkraft auf den ersten Querholm (6) und die Schraubgestellerweiterungseinheit (10) ausübt.

5. Schraubgestell nach einem der vorherigen Ansprüche,
**gekennzeichnet durch**
wenigstens einen Topf (46) zur Verstärkung einer Innenwand des ersten bzw. zweiten Außenrahmenelements (2, 4) gegen die von der ersten Mutter (44) bzw. zweiten Mutter ausgeübte Druckkraft, wobei dieser Topf (46) in dieses erste bzw. zweite Außenrahmenelement (2, 4) eingeschweißt ist und einen zumindest teilweise an dieser Innenwand des ersten bzw. zweiten Außenrahmenelements (2, 4) anliegenden Boden aufweist, der ein Loch aufweist, **durch** welches das erste bzw. zweite Ende (42, 108, 48) der ersten bzw. zweiten Spannstange (40, 110) geführt ist.

6. Schraubgestell nach einem der vorherigen Ansprüche,
**dadurch gekennzeichnet, dass**
der erste und der zweite Querholm (6, 14) einen Hohlkörper aufweisen, durch welchen die erste und/oder zweite Spannstange (40, 110) geführt ist.

7. Schraubgestell nach Anspruch 6,
**dadurch gekennzeichnet, dass**
der erste bzw. zweite Querholm (6, 14) an seinen beiden Enden jeweils eine Endkappe (98, 100) mit einem Loch aufweist, durch welches die erste bzw. zweite Spannstange (40, 110) über die Mutter (44) bzw. Muffe (50) geführt ist.

8. Schraubgestell nach einem der vorherigen Ansprüche,
**gekennzeichnet durch**
einen Verdrehschutz, welcher einem Verdrehen des ersten und/oder zweiten Querholms (6, 14) gegen das erste bzw. zweite Außenrahmenelement (2, 4) und/oder ggf. das Innenrahmenelement (12) entgegenwirkt.

9. Schraubgestell nach einem der vorherigen Ansprüche,
**dadurch gekennzeichnet, dass**
die erste und die zweite Spannstange (40, 70, 72, 74, 76, 78, 80, 110) eine einheitliche standardisierte Länge oder jeweils eine von mehreren standardisierten Längen aufweisen.

10. Schraubgestell nach einem der vorherigen Ansprüche,
**dadurch gekennzeichnet, dass**
dieses Schraubgestell neben dem ersten bzw. zweiten Querholm (6, 14) wenigstens einen weiteren ersten bzw. zweiten Querholm (16, 18, 20, 22, 24, 26, 28, 30, 32, 34, 36, 38) aufweist und diese ersten bzw. zweiten Querholme (16, 18, 20, 22, 24, 26, 28, 30, 32, 34, 36, 38) eine einheitliche standardisierte Länge oder jeweils eine von mehreren standardisierten Längen aufweisen.

11. Schraubgestell nach einem der vorherigen Ansprüche,
**gekennzeichnet durch**
wenigstens ein Querverbindungselement (102, 104), welches den ersten bzw. zweiten Querholm (24, 36) und einen weiteren ersten bzw. zweiten Querholm (26, 38) aufweist, wobei diese ersten bzw. zweiten Querholme (24, 26; 36, 38) relativ zueinander fixiert sind und wobei dieses Querverbindungselement (102, 104) zwischen den Außenrahmenelementen (2, 4) angeordnet und eingespannt ist.

12. Schraubgestell nach Anspruch 11, **gekennzeichnet durch** Dämpfungsmittel und/oder wenigstens einen Lüfter, welche bzw. welcher an dem Querverbindungselement (102, 104) angeordnet sind bzw. ist.

13. Schraubgestell nach einem der vorherigen Ansprüche,
**gekennzeichnet durch**
einen standardisierten, insbesondere größer als 19 Zoll breiten, Abstand zwischen dem ersten und dem zweiten Außenrahmenelement (2, 4) bzw. zwischen dem ersten oder zweiten Außenrahmenelement (2, 4) und dem Innenrahmenelement (12) bzw. zwischen dem Innenrahmenelement (12) und einem weiteren Innenrahmenelement zur Aufnahme wenigstens eines Konsolen-Einbauelementes, welches insbesondere eine Breite von 19 Zoll aufweist.

## Claims

1. A screwed frame for holding fitted elements, comprising a first external frame (2), a second external frame (4), at least one so-called first transverse strut (6) which is arranged between said external frame elements (2, 4), and
at least one bracing device (8) which has at least one so-called first bracing rod (40) and connects the first external frame element (2) with the second external frame element (4), wherein said bracing device (8) extends from said first external frame element (2) to said second external frame element (4) and braces said first transverse strut (6) between said external frame elements (2, 4), wherein the screwed frame (1) has at least one screwed frame extension device (10) braced between the first transverse strut (6) and the second external frame element (4), wherein said screwed frame extension device has an internal frame element (12) and at least one second transverse strut (14) and extends the width of the screwed frame (1), and the bracing device (8) has at least one bracing rod lengthening device (52) which comprises a second bracing rod (110) and a sleeve (50) by means of which the second bracing rod (110) is connected to the first bracing rod (40) and/or to a further bracing rod, wherein the length of the first transverse strut (6) corresponds to the length of the first bracing rod (40) and the length of the second bracing rod (110) corresponds to the length of the second transverse strut (14) in such a manner that the sleeve (50) is arranged in the region of the internal frame element (12),
**characterized in that**
the bracing device (8) has a first nut (44) in the region of the first external frame element (2) and a second nut in the region of the second external frame element (4) and can be braced by means of the first nut (44) as well as by means of the second nut.

2. The screwed frame according to claim 1,
**characterized in that**
on its two ends (42, 48), the first bracing rod (40) has external threads onto which said first nut (44) is screwed in the region of the first external frame element (2), wherein said first nut (44) exerts a tensile force on the first bracing rod (40) and a compressive force on the first transverse strut (6) and the screwed frame extension device (10).

3. The screwed frame according to claim 2,
**characterized in that**
on its two ends (108), the second bracing rod (110) has external threads and the sleeve (50) has at least one internal thread, wherein said second bracing rod (110) and/or the first bracing rod (40) or, respectively, a further bracing rod are/is screwed into the sleeve (50).

4. The screwed frame according to claim 2 or claim 3,
**characterized in that**
a second end (48) of the second bracing rod (110) is arranged in the region of the second external frame element (4) and has an external thread onto which the second nut is screwed, wherein said second nut exerts a tensile force on the first bracing rod (40) and the bracing rod extension device (52) and exerts a compressive force on the first transverse strut (6) and the screwed frame extension device (10).

5. The screwed frame according to any one of the preceding claims,
**characterized by**
at least one cup (46) for reinforcement of an inner wall of the first or, respectively, second external frame element (2, 4) against the compressive force exerted by the first nut (44) or, respectively, second nut, wherein said cup (46) is welded into said first or, respectively, second external frame element (2, 4) and has a bottom which abuts at least partially against said first or, respectively, second external frame element (2, 4), which bottom has a hole through which the first or, respectively, second end (42, 108, 48) of the first or, respectively, second bracing rod (40, 110) is guided.

6. The screwed frame according to any one of the preceding claims,
**characterized in that**
the first and the second transverse struts (6, 14) have a hollow body through which the first and/or the second bracing rod (40, 110) is guided.

7. The screwed frame according to claim 6,
**characterized in that**
on each of its two ends, the first or, respectively, second transverse strut (6, 14) has one end cap (98, 100) with a hole through which the first or, respectively, second bracing rod (40, 110) is guided via the nut (44) or, respectively, sleeve (50).

8. The screwed frame according to any one of the preceding claims,
**characterized by**
an anti-rotation protection which counteracts a rotation of the first and/or second transverse strut (6, 14) with respect to the first or, respectively, second external frame element (2, 4) and/or, if applicable, the internal frame element (12).

9. The screwed frame according to any one of the preceding claims,
**characterized in that**
the first and the second bracing rod (40, 70, 72, 74, 76, 78, 80, 110) have a uniform, standardized length or in each case one of a plurality of standardized lengths.

10. The screwed frame according to any one of the preceding claims,
**characterized in that**
besides the first or, respectively, second transverse strut (6, 14), said screwed frame has at least one further first or, respectively, second transverse strut (16, 18, 20, 22, 24, 26, 28, 30, 32, 34, 36, 38) and said first or, respectively, second transverse struts (16, 18, 20, 22, 24, 26, 28, 30, 32, 34, 36, 38) have a uniform, standardized length or in each case one of a plurality of standardized lengths.

11. The screwed frame according to any one of the preceding claims,
**characterized by**
at least one transverse connecting element (102, 104) which comprises the first or, respectively, second transverse strut (24, 36) and a further first or, respectively, second transverse strut (26, 38), wherein said first or, respectively, second transverse struts (24, 26; 36, 38) are fixed relative to one another and wherein said transverse connecting element (102, 104) is arranged and braced between the external frame elements (2, 4).

12. The screwed frame according to claim 11,
**characterized by**
damping means and/or at least one ventilator which are/is arranged on the transverse connecting element (102, 104).

13. The screwed frame according to any one of the preceding claims,
**characterized by**
a standardized distance which is in particular greater than 19 inch in width between the first and the second external frame element (2, 4) or, respectively, between the first or second external frame element (2, 4) and the internal frame element (12) or, respectively, between the internal frame element (12) and a further internal frame element for receiving at least one fitted console element which has in particular a width of 19 inch.

## Revendications

1. Châssis à visser destiné à la fixation d'éléments à monter avec un premier élément de cadre extérieur (2), un deuxième élément de cadre extérieur (4), au moins un dit premier longeron transversal (6) qui est disposé entre ces éléments de cadre extérieur (2, 4) et au moins un dispositif de serrage (8), qui présente au moins une dite première tige de serrage (40) et relie le premier élément de cadre extérieur (2) au deuxième élément de cadre extérieur (4), ce dispositif de serrage (8) s'étendant de ce premier élément de cadre extérieur (2) à ce deuxième élément de cadre extérieur (4) et serrant ce premier longeron transversal (6) entre ces éléments de cadre extérieur (2, 4), le châssis à visser (1) présentant au moins une unité d'extension de châssis à visser (10) serrée entre le premier longeron transversal (6) et le deuxième élément de cadre extérieur (4), qui présente un élément de cadre intérieur (12) et au moins un deuxième longeron transversal (14) et étend le châssis à visser (1) dans la largeur et le dispositif de serrage (8) présente au moins une unité de prolongation de tige de serrage (52), qui présente une deuxième tige de serrage (110) et un manchon d'accouplement (50) au moyen duquel la deuxième tige de serrage (110) est reliée à la première tige de serrage (40) et/ou avec une autre tige de serrage, la longueur du premier longeron transversal (6) correspondant à la longueur de la première tige de serrage (40) tout comme la longueur de la deuxième tige de serrage (110) à la longueur du deuxième longeron transversal de telle sorte que le manchon d'accouplement (50) est disposé à proximité de l'élément de cadre intérieur (12) **caractérisé en ce que** le dispositif de serrage présente un premier écrou (44) à proximité du premier élément de cadre extérieur (2) ainsi qu'un deuxième écrou à proximité du deuxième élément de cadre extérieur et peut être serré aussi bien au moyen du premier écrou (44) qu'au moyen du deuxième écrou.

2. Châssis à visser selon la revendication 1 **caractérisé en ce que** la première tige de serrage (40) présente un filetage extérieur à ses deux extrémités (42, 48) au moyen duquel ce premier écrou (44) est vissé à proximité du premier élément de cadre extérieur (2), ce premier écrou (44) exerçant une force de traction sur la première tige de serrage (40) et une force de pression sur le premier longeron transversal (6) et sur l'unité d'extension de châssis à visser (10).

3. Châssis à visser selon la revendication 2 **caractérisé en ce que** la deuxième tige de serrage (110) présente à ses deux extrémités (108) un filetage extérieur et le manchon d'accouplement (50) au moins un filetage intérieur, cette deuxième tige de serrage (110) et/ou la première tige de serrage (40) ou une autre tige étant vissée(s) dans le manchon d'accouplement (50).

4. Châssis à visser selon la revendication 2 ou 3 **caractérisé en ce qu'**une deuxième extrémité (48) de la deuxième tige de serrage (110) est disposée à proximité du deuxième élément de cadre extérieur (4) et présente un filetage extérieur au moyen duquel le deuxième écrou est vissé, ce deuxième manchon d'accouplement exerçant une force de traction sur la première tige de serrage (40) et l'unité de prolongation de tige de serrage (52) et une force de pression sur le premier longeron transversal (6) et l'unité d'extension de châssis à visser (10).

5. Châssis à visser selon une quelconque des revendications précédentes **caractérisé par** au moins une garniture en forme de pot (46) destinée à renforcer une paroi interne du premier ou du deuxième élément de cadre extérieur (2, 4) contre la force de pression exercée par le premier écrou (44) ou le deuxième écrou, cette garniture en forme de pot (46) étant soudée dans ce premier ou ce deuxième élément de cadre extérieur (2, 4) et présentant un fond plaqué au moins partiellement à cette paroi interne du premier ou deuxième élément de cadre extérieur (2, 4), qui présente un trou à travers lequel la première ou la deuxième extrémité (42, 108, 48) de la première ou deuxième tige de serrage (40, 110) est passée.

6. Châssis à visser selon une quelconque des revendications précédentes **caractérisé en ce que** le premier et le deuxième longeron transversal (6, 14) présentent un corps creux à travers lequel est passée la première et/ou deuxième tige de serrage (40, 110).

7. Châssis à visser selon la revendication 6 **caractérisé en ce que** le premier ou deuxième longeron transversal (6, 14) présente à ses deux extrémités à chaque fois un cache d'extrémité (98, 100) avec un trou à travers lequel est passée la première ou la deuxième tige de serrage (40, 110) par l'écrou (44) ou manchon d'accouplement (50).

8. Châssis à visser selon une quelconque des revendications précédentes **caractérisé par** une protection anti-torsion qui agit contre une torsion du premier et/ou du deuxième longeron transversal (6, 14) par rapport au premier ou deuxième élément de cadre extérieur (2, 4) et/ou le cas échéant à l'élément de cadre intérieur (12).

9. Châssis à visser selon une quelconque des revendications précédentes **caractérisé en ce que** la première et la deuxième tige de serrage (40, 70, 72, 74, 76, 78, 80, 110) présentent une longueur uniforme normalisée ou à chaque fois une longueur de plusieurs longueurs normalisées.

10. Châssis à visser selon une quelconque des revendications précédentes **caractérisé en ce que** ce châssis à visser présente en plus du premier ou deuxième longeron transversal (6, 14) au moins un autre premier ou deuxième longeron transversal (16, 18, 20, 22, 24, 26, 28, 30, 32, 34, 36, 38) et **en ce que** ces premiers ou deuxièmes longerons transversaux (16, 18, 20, 22, 24, 26, 28, 30, 32, 34, 36, 38) présentent une longueur uniforme normalisée ou à chaque fois une longueur de plusieurs longueurs normalisées.

11. Châssis à visser selon une quelconque des revendications précédentes **caractérisé par** au moins un élément de liaison transversal (102, 104) qui présente le premier ou le deuxième longeron transversal (24, 36) et un autre premier ou deuxième longeron transversal (26, 38), ces premiers ou deuxièmes longerons transversaux (24, 26 ; 36, 38) étant fixés relativement les uns aux autres et cet élément de liaison transversal (102, 104) étant disposé et serré entre les éléments de cadre extérieur (2, 4).

12. Châssis à visser selon la revendication 1 **caractérisé par** un moyen d'amortissement et/ou au moins d'amortissement et/ou au moins un aérateur, lequel ou lesquels est/sont disposé(s) sur l'élément de liaison transversal (102, 104).

13. Châssis à visser selon une quelconque des revendications précédentes **caractérisé par** un espace normalisé, en particulier supérieur à 19 pouces de large entre le premier et le deuxième élément de cadre extérieur (2, 4) ou entre le premier ou le deuxième élément de cadre extérieur (2, 4) et l'élément de cadre intérieur (12) ou entre l'élément de cadre intérieur (12) et un autre élément de cadre intérieur pour recevoir au moins un élément à monter de console qui présente en particulier une largeur de 19 pouces.
